# EUROPÄISCHE PATENTSCHRIFT

(11) **EP 2 759 699 B1**
(45) Veröffentlichungstag und Bekanntmachung des Hinweises auf die Patenterteilung: **17.07.2019**
(21) Anmeldenummer: 13198089.8
(22) Anmeldetag: 18.12.2013
(51) Int. Cl.: F03D 9/00, F03D 7/02

(54) **VERFAHREN ZUM BETREIBEN EINES OFFSHORE-WINDENERGIESYSTEMS MIT EINER HOCHSPANNUNGS-GLEICHSTROMÜBERTRAGUNGSSTATION.**
METHOD OF OPERATING AN OFFSHORE WINDPARK WITH A HIGH VOLTAGE DIRECT CURRENT TRANSFER STATION.
PROCÉDÉ DE FONCTIONNEMENT D'UN PARC ÉOLIEN OFFSHORE AVEC UNE STATION DE TRANSFERT DE COURANT CONTINU HAUTE TENSION.

(30) Priorität: 28.01.2013 DE 102013001368
(43) Veröffentlichungstag der Anmeldung: 30.07.2014
(73) Patentinhaber: innogy SE, 45128 Essen (DE)
(72) Erfinder: Runge, Dr.-Ing. Jörn, 22297 Hamburg (DE); Feltes, Dr.-Ing. Christian, 22453 Hamburg (DE); Amelsberg, Dr. Swantje, 22297 Hamburg (DE); Wiebe, Eduard, 22083 Hamburg (DE)
(74) Vertreter: Cohausz & Florack

(56) Entgegenhaltungen:
- WO-A1-2012/175110
- US-A1- 2012 217 824
- US-A1- 2012 300 510
- HONGLIN ZHOU ET AL: "Modeling, Analysis, and Control for the Rectifier of Hybrid HVdc Systems for DFIG-Based Wind Farms", IEEE TRANSACTIONS ON ENERGY CONVERSION, IEEE SERVICE CENTER, PISCATAWAY, NJ, US, Bd. 26, Nr. 1, 1. März 2011 (2011-03-01), Seiten 340-353, XP011382789, ISSN: 0885-8969, DOI: 10.1109/TEC.2010.2096819

## Beschreibung

Die Erfindung betrifft ein Windenergiesystem, insbesondere ein Offshore-Windenergiesystem, umfassend eine Mehrzahl von mit einer Hochspannungs-Gleichstromübertragungsstation elektrisch verbundenen Windkraftanlagen. Darüber hinaus betrifft die Erfindung ein Verfahren zum Betreiben eines Windenergiesystems.

Die Nachfrage nach Energie aus regenerativen Quellen steigt stetig. Eine der zur Verfügung stehenden Ressourcen ist hierbei die kinetische Windenergie. Eine Windkraftanlage wandelt die kinetische Energie des Windes mittels eines Rotors und eines Generators in elektrische Energie um.

Um den elektrischen Energieertrag zu maximieren, kann aus mehreren Windkraftanlagen ein Windenergiesystem bzw. ein Windpark gebildet werden. Die Windkraftanlagen können insbesondere in Gebieten mit hoher Windwahrscheinlichkeit und -intensität aufgestellt werden. Besonders geeignet sind Standorte auf der offenen See, auch Offshore-Gebiete genannt.

In der Regel (siehe US 2012/0300510 A1 oder "Modeling, Analysis, and Control for the Rectifier of Hybrid HVdc Systems for DFIG-Based Wind Farms", Honglin Zhou et al, in IEEE Transactions on Energy Conversion, Vol. 26, No 1, March 2011) ist in einem Windenergiesystem eine Mehrzahl von Windkraftanlagen elektrisch mit einer ersten Offshore-Umspannstation verbunden. Bei der Offshore-Umspannstation kann es sich insbesondere um eine Hochspannungs-Gleichstromübertragungsstation handeln. Die Hochspannungs-Gleichstromübertragungsstation ist wiederum zum Übertragen der durch die Windkraftanlagen erzeugten Energie in Form eines Gleichstroms mit einer weiteren Umspannstation verbunden, welche sich auf dem Festland befindet. Diese transformiert den empfangenen Gleichstrom wieder in Wechselstrom und speist ihn vorzugsweise ins öffentliche Netz ein.

Jedes Windenergiesystem ist aus wirtschaftlichen Gründen stets nur für eine maximale Nennleistung ausgelegt. Beispielsweise sind Komponenten des Windenergiesystems, wie Energiekabel, Wechselrichter, etc. in der Regel für einen maximal zulässigen Strom ausgelegt. Ein Überschreiten des maximal zulässigen Stroms kann zu Beschädigungen an den eingesetzten Wechselrichtern und/oder Energiekabeln führen. Es versteht sich, dass für unterschiedliche Komponenten unterschiedliche Vorgaben bestehen können. Insbesondere kann eine Überlast, also ein zu hoher Strom oder eine zu hohe Leistung, Beschädigung von Komponenten hervorrufen.

Ein stetiges Anliegen ist es hierbei, das Windenergiesystem möglichst mit dieser maximalen Nennleistung zu betreiben, um den Energieertrag zu maximieren. Mit anderen Worten sollte möglichst annähernd der maximal zulässige Strom erzeugt und mittels der Hochspannungs-Gleichstromübertragungsstation an das öffentliche Netz übertragen werden.

Um dies zu erreichen, ist es aus dem Stand der Technik bekannt, den Blattwinkel der Rotorblätter einer Windkraftanlage an die (aktuellen) meteorologischen Gegebenheiten, insbesondere an die aktuelle Windstärke, anzupassen. Zum Verstellen des Blattwinkels der Rotorblätter weist eine Windkraftanlage mindestens eine geeignete Aktuatoreinrichtung auf. Eine derartige Aktuatoreinrichtung zur Anpassung des Rotorblattwinkels steuert zum Beispiel in Abhängigkeit der gemessenen Generatordrehzahl den Anströmwinkel der Luft am Rotorblatt und regelt damit die durch die aerodynamischen Auftriebskräfte verursachte Drehzahl des Rotors. Wird eine obere oder untere Drehzahlgrenze überschritten, kann mittels der Aktuatoreinrichtung gegengesteuert werden.

Um eine Überlast des Windenergiesystems, beispielsweise eine Überlastleistung und/oder ein Überlaststrom, zu verhindern, wird die Drehzahl am Generator überwacht. Wird eine Überdrehzahl detektiert, wird die Aktuatoreinrichtung entsprechend angesteuert. Dieses Regelungskonzept impliziert eine gewisse Drehzahlvariabilität von Windkraftanlagen, da die Aktuatoreinrichtungen für die Blattwinkelverstellung erst eingreifen, wenn eine Überdrehzahl am Generator detektiert wird.

Problematisch bei dieser Regelung ist insbesondere die Trägheit der Aktuatoreinrichtungen (mehrere Sekunden), die bei bestimmten Bedingungen eine rechtzeitige Regelung zur Vermeidung von Beschädigungen aufgrund einer Überlast nicht erlauben. Beispielsweise aufgrund eines Kurzschlusses aber auch bei Starkwind mit gleichzeitig auftretender Böigkeit kann es zu Leistungsüberschwingern oberhalb der zulässigen Nennleistung kommen, welche zu einer Überlast und Beschädigung des Windenergiesystems führen, da eine zeitnahe Regelung mit dem zuvor beschriebenen Regelungskonzept nicht ausreichend möglich ist.

Unter einer Überlast bzw. Überlastung des Windenergiesystems ist insbesondere eine elektrische Überlastung von mindestens einer Komponente des Windenergiesystems zu verstehen. Eine derartige Überlast kann zu einem Ausfall der Komponente und damit zu einem Ausfall der Netzanbindung führen. Dies ist insbesondere dann der Fall, wenn eine Komponente der Hochspannungsgleichstromübertragung, wie die Umrichteranlage, betroffen ist. Ein erneutes Anfahren nach Anspringen des Schutzsystems und/oder eine Reparatur, insbesondere bei einem Offshore-Windenergiesystem, ist/sind mit einem hohen Aufwand und entsprechenden Kosten verbunden.

Zur Lösung dieser Problematik ist es aus dem Stand der Technik bekannt, die Windkraftanlagen beispielsweise bei Starkwind pauschal um einen vorgebbaren Wert zu drosseln. Insbesondere werden die Windkraftanlagen derart gedrosselt, dass auch eine kurzeitige Erhöhung der Leistung und damit des von den Windkraftanlagen erzeugten Stroms beispielsweise aufgrund einer Windböe nicht zu einer Überlast des Windenergiesystems führt. Eine pauschale und stationäre Drosselung einzelner Windkraftanlagen ist jedoch aus wirtschaftlichen Gründen nachteilig. Insbesondere sollte eine derartige Drosselung zumindest reduziert werden.

Der Erfindung liegt daher die Aufgabe zugrunde, ein Windenergiesystem und ein Verfahren zum Betreiben eines Windenergiesystems zur Verfügung zu stellen, welches einen sicheren Betrieb bei gleichzeitig maximalem Leistungsertrag ermöglicht.

Die Aufgabe wird erfindungsgemäß bei einem Windenergiesystem, insbesondere einem Offshore-Windenergiesystem, gemäß Patentanspruch 1 gelöst. Das Windenergiesystem umfasst eine Mehrzahl von mit einer Hochspannungs-Gleichstromübertragungsstation elektrisch verbundenen Windkraftanlagen. Mindestens eine Überlasterfassungseinrichtung zum Detektieren einer Überlast des Windenergiesystems ist vorgesehen. Mindestens eine Steuereinrichtung zum Ansteuern mindestens einer Überlastreduktionsschaltung zumindest bei Detektion einer Überlast ist vorgesehen. Die Überlastreduktionsschaltung ist eingerichtet, derart, dass bei einer Ansteuerung der Überlastreduktionsschaltung zumindest der an der Hochspannungs-Gleichstromübertragungsstation empfangene Strom reduziert wird.

Im Gegensatz zum Stand der Technik kann eine hohe Betriebssicherheit gewährleistet werden, indem eine Überlast detektiert und zeitnah durch eine Überlastreduktionsschaltung abgeführt/beseitigt wird. Indem bei Detektion einer Überlast die Überlastreduktionsschaltung diese insbesondere durch eine Stromreduktion abführt, ist es auch bei Starkwind und Windböengefahr nicht erforderlich, eine oder mehrere Windkraftkaftanlagen pauschal zu drosseln. Der Energieertrag kann bei gleichzeitiger Erhöhung der Sicherheit gesteigert werden.

Das Windenergiesystem bzw. der Windpark kann insbesondere ein Offshore-Windenergiesystem sein. Mehrere Windkraftanlagen können durch ein Energiekabelnetz umfassend eine Mehrzahl von Energiekabeln miteinander verbunden sein. Eine Windkraftanlage kann die kinetische Energie des Winds mittels eines Rotors und eines Generators in elektrische Energie umwandeln.

Die Windkraftanlagen sind über das Energiekabelnetz mit einer Hochspannungs-Gleichstromübertragungsstation elektrisch verbunden. Mit anderen Worten wird der von den Windkraftanlagen erzeugte Strom an die Hochspannungs-Gleichstromübertragungsstation zur weiteren Übertragung übertragen. Das Windenergiesystem kann auch mehrere Windkraftanlagen von verschiedenen Windparks umfassen, wobei die Windkraftanlagen mit der gleichen Hochspannungs-Gleichstromübertragungsstation elektrisch verbunden sind.

Eine Hochspannungs-Gleichstromübertragungsstation, insbesondere eine Offshore-Hochspannungs-Gleichstromübertragungsstation, weist zumindest eine Stromrichtereinrichtung auf, um den empfangenen Strom zu transformieren. Bei dem empfangenen Strom handelt es sich um den (Wechsel-)Strom, der von der Mehrzahl an Windkraftanlagen erzeugt wurde.

Ferner ist mindestens eine Überlasterfassungseinrichtung zur Detektion einer Überlast vorgesehen. Die Überlasterfassungseinrichtung kann beispielsweise auf der Hochspannungs-Gleichstromübertragungsstation angeordnet sein. Alternativ oder zusätzlich kann eine, bevorzugt jede Windkraftanlage eine Überlasterfassungseinrichtung aufweisen.

Wird eine Überlast, wie ein unzulässig hoher Strom im Netz des Windenergiesystems, eine unzulässige Spannung im Netz des Windenergiesystems, eine unzulässige Leistung im Netz des Windenergiesystems oder eine unzulässige hohe Drehzahl eines oder mehrerer Generatoren detektiert, steuert eine Steuereinrichtung eine Überlastreduktionsschaltung an. Die Überlastreduktionsschaltung ist dazu eingerichtet, zumindest eine Überlast des Windenergiesystems durch Abführen eines Überlaststroms zu vermeiden. So ist erkannt worden, dass die kritischen Komponenten, die bei einer Überlast in einem Windenergiesystem beschädigt werden können, in der Regel Komponenten der Hochspannungs-Gleichstromübertragungsstation sind. Daher wird erfindungsgemäß der von der Hochspannungs-Gleichstromübertragungsstation empfangene Strom durch die Überlastreduktionsschaltung reduziert.

Durch eine Reduktion des empfangenen Stroms im Überlastfall durch die Überlastreduktionsschaltung kann eine Beschädigung des Windenergiesystems verhindert werden. Es ist keine pauschale Drosselung oder nur eine geringere pauschale Drosselung der Windkraftanlagen erforderlich. Überschwingungen können reduziert werden. Auch bei Starkwind mit Windböen kann ein maximaler Energieertrag generiert werden.

Die Überlastreduktionsschaltung kann an der Hochspannungs-Gleichstromübertragungsstation, beispielsweise vor einer Stromrichtereinrichtung, und/oder an einer, vorzugsweise an sämtlichen Windkraftanlage/n, angeordnet sein. Es versteht sich, dass die mindestens eine Überlastreduktionsschaltung auch zwischen der Hochspannungs-Gleichstromübertragungsstation und den Windkraftanlagen, beispielsweise an einer optionalen zwischengeschalteten Umspannstation, angeordnet sein kann.

Die Überlasterfassungseinrichtung kann ferner vorzugsweise detektieren, wenn die Überlastbedingung nicht mehr vorliegt. Dann kann die Überlastreduktionsschaltung von der Steuereinrichtung entsprechend angesteuert und wieder deaktiviert werden.

Die Detektion einer Überlast kann grundsätzlich auf verschiedene Weise erfolgen. Gemäß einer ersten Ausführungsform des erfindungsgemäßen Windenergiesystems kann die Überlasterfassungseinrichtung eingerichtet sein, mindestens einen elektrischen Netzparameter des Windenergiesystems zu erfassen. Die Überlasterfassungseinrichtung kann eingerichtet sein, eine Überlast des Windenergiesystems durch einen Vergleich des gemessenen Netzparameters mit einem vorgegebenen Netzparametergrenzwert zu detektieren. Bei dem elektrischen Netzparameter handelt es sich insbesondere um einen Netzparameter, der für eine Überlast des Windenergiesystems indikativ ist. Beispielsweise können ein (aktueller) Netzstrom, eine (aktuelle) Netzspannung und/oder eine (aktuelle) Netzleistung des Windenergiesystems erfasst werden. Insbesondere kann hierzu mindestens eine geeignete Messeinrichtung vorgesehen sein.

Der erfasste Netzparameter wird bevorzugt mit einem Netzparametergrenzwert verglichen. Der Netzparametergrenzwert gibt den maximal zulässigen Wert des gemessenen Netzparameters an. Wird der Netzparametergrenzwert überschritten, liegt eine Überlast des Windenergiesystems vor. Eine entsprechende Überlastdetektion besitzt den Vorteil, dass eine Überlast äußerst schnell (zwischen 10 ms und 1 s) und exakt detektiert werden kann.

Der mindestens eine von der Überlasterfassungseinrichtung erfasste Netzparameter kann beispielsweise die aktuell erzeugte Leistung sein oder eine aktuelle Netzspannung. Gemäß einer bevorzugten Ausführungsform kann die Überlasterfassungseinrichtung eingerichtet sein, als Netzparameter den von mindestens einer Windkraftanlage erzeugten Strom zu messen. Insbesondere kann die Überlasterfassungseinrichtung den von jeder Windkraftanlage erzeugten Strom messen. Beispielsweise kann jede Windkraftanlage über eine entsprechende Überlasterfassungseinrichtung verfügen. Zum Messen des Stroms kann die Überlasterfassungseinrichtung eine geeignete Messeinrichtung aufweisen. Aus der Summe sämtlicher gemessener Stromwerte kann der an der Hochspannungs-Gleichstromübertragungsstation empfangene Strom dann vorzugsweise berechnet werden.

Alternativ oder zusätzlich kann die Überlasterfassungseinrichtung eingerichtet sein, als Netzparameter den an der Hochspannungs-Gleichstromübertragungsstation empfangenen Strom zu messen. Beispielsweise kann die Hochspannungs-Gleichstromübertragungsstation über eine Überlasterfassungseinrichtung verfügen.

Es versteht sich, dass eine Mehrzahl von unterschiedlichen Netzparametern gemessen und mit entsprechenden Netzparametergrenzwerten verglichen werden können. Eine Überlast kann hierdurch besonders sicher detektiert werden. Evtl. Messfehler können erkannt werden.

In einer weiteren Ausführungsform des erfindungsgemäßen Windenergiesystems kann die Überlastreduktionsschaltung mindestens eine zuschaltbare Last aufweisen. Beispielsweise kann ein zur Erde geschalteter Widerstand vorgesehen sein. Der Widerstand kann über eine geeignete Schalteinrichtung mit einem Energiekabel verbunden sein. Bei einer Überlastdetektion kann durch Schließen der Schalteinrichtung ein Überlaststrom über die Last abgeleitet werden. Dies erlaubt eine besonders schnelle Regelung. Um zu große Spannungseinbrüche zu vermeiden kann insbesondere eine Mehrzahl von stufenförmig zuschaltbaren Lasten vorgesehen sein.

Alternativ oder zusätzlich zu einer zuschaltbaren Last kann die Überlastreduktionsschaltung eine Chopperschaltung sein. Eine Chopperschaltung, also eine Zerhackerschaltung, kann derart angesteuert werden, dass ein Überlaststrom abgeführt wird.

Darüber hinaus kann alternativ oder zusätzlich die Überlastreduktionsschaltung eine Spannungserhöhungsschaltung sein. Eine Spannungserhöhungsschaltung ist dazu eingerichtet, die Netzspannung bei gleichbleibender Netzleistung insbesondere an der Hochspannungs-Gleichstromübertragungsstation zu erhöhen. Bei gleichbleibender Netzleistung und erhöhter Netzspannung reduziert sich der empfangene Strom. Beispielsweise kann die Spannungserhöhungsschaltung zur Erhöhung der Spannung Blindleistung in das Netz des Windenergiesystems einspeisen.

Bevorzugt kann die Steuereinrichtung eine leistungselektronische Steuereinrichtung sein, wobei die leistungselektronische Steuereinrichtung insbesondere zum gepulsten Ansteuern der mindestens einen Last eingerichtet ist. Durch eine gepulste Ansteuerung können Spannungssprünge reduziert werden. Eine genaue Ableitung oder Reduzierung (nur) des Überlaststroms ist möglich. Der genaue Wert des abzuführenden Überlaststroms kann beispielsweise in Abhängigkeit des Vergleichsergebnisses von gemessenem Netzparameter und Netzparametergrenzwert durch die Steuereinrichtung bestimmt werden.

Ferner ist erkannt worden, dass eine bereits in einer Windkraftanlage ohnehin angeordnete Chopperschaltung als Überlastreduktionsschaltung eingesetzt werden kann. Gemäß einer Ausführungsform kann die Chopperschaltung eine im Gleichstromzwischenkreis einer Windkraftanlage vorgesehene Chopperschaltung sein. Um eine Beschädigung der ohnehin vorgesehenen Chopperschaltung im Falle einer erforderlichen Überlastabführung zu verhindern, kann die Chopperschaltung vorzugsweise entsprechend modifiziert werden und insbesondere Komponenten mit einer höheren Stromtragfähigkeit aufweisen. Alternativ oder zusätzlich können die Komponenten eine längere Stromtragfähigkeit aufweisen.

Das Windenergiesystem gemäß einer weiteren Ausführungsform der Erfindung kann mindestens eine Winderfassungseinrichtung umfassen, wobei die Winderfassungseinrichtung zum Erfassen von mindestens einem Windparameter in einem vorgegebenen Abstand zu mindestens einer Windkraftanlage eingerichtet sein kann. Die Winderfassungseinrichtung kann eingerichtet sein, den erfassten Windparameter an die Steuereinrichtung zu übertragen. Beispielsweise kann eine Winderfassungseinrichtung mindestens 200 m vor der nächsten Windkraftanlage angeordnet sein. Es versteht sich, dass mehrere Winderfassungseinrichtungen in unterschiedlicher Entfernung zu unterschiedlichen Windkraftanlagen angeordnet sein können. Als Windparameter kann beispielsweise die Windgeschwindigkeit und/oder Windrichtung erfasst werden. Der mindestens eine erfasste Windparameter kann über einen Kommunikationskanal an die Steuereinrichtung übertragen werden. Hierdurch kann die Steuereinrichtung frühzeitig über eine evtl. bevorstehende Überlastsituation beispielsweise aufgrund einer detektierten Windstärkenänderung informiert werden. Daraufhin kann die Steuereinrichtung geeignete Gegenmaßnahmen ergreifen. So kann die Ansteuerung einer Überlastreduktionsschaltung zumindest von der Steuereinrichtung vorbereitet werden. Die zur Verfügung stehende Regelzeit kann verlängert werden.

Vorzugsweise kann mindestens eine Windkraftanlage mindestens eine Aktuatoreinrichtung zum Verstellen eines Rotorblattwinkels der Windkraftanlage aufweisen. Die Aktuatoreinrichtung kann eingerichtet sein, den Rotorblattwinkel in Abhängigkeit des erfassten Windparameters zu verstellen. Hierdurch kann (zusätzlich) vorbeugend die erzeugte Leistung und damit der an der Hochspannungs-Gleichstromübertragungsstation empfangene Strom reduziert werden. Insbesondere können auftretende Überlastspitzen, beispielsweise Stromspitzen, reduziert werden.

Auch kann vorgesehen sein, dass vorbeugend die Turbine von mindestens einer Windkraftanlage abgeschaltet wird. Es versteht sich, dass im Vorfeld von zu erwartenden Stromspitzen eine Mehrzahl von Turbinen deaktiviert werden kann.

Insbesondere kann für das Windenergiesystem, wie ein Windpark, der Leistungssollwert entsprechend angepasst werden. Entsprechend dem Leistungssollwert können dann die einzelnen Windkraftanlagen geregelt werden. Dies kann, wie bereits beschrieben wurde, bis zur Abschaltung von Turbinen gehen. Beispielsweise kann die Sollwertvorgabe eine interne Vorgabe des Windenergiesystems und/oder eine externe Vorgabe, wie von einem Netzbetreiber und/oder einem benachbarten Windenergiesystem, wie einem weiteren Windpark, sein. So können bevorzugt zumindest zwei Windenenergiesysteme über ein Kommunikationsnetz miteinander verbunden sein und Nachrichten austauschen. Insbesondere können die zentralen Steuereinrichtungen der Windenergiesysteme miteinander gekoppelt sein. Vorzugsweise können eine Mehrzahl von Windenergiesystemen miteinander kommunizieren und Daten, wie Ist-Leistungsdaten und Soll-Leistungsdaten, austauschen. So kann die Steuereinrichtung eingerichtet sein, Ist-Leistungsdaten und Soll-Leistungsdaten an mindestens einer weiteren Steuereinrichtung eines weiteren Windenergiesystems zu senden und/oder die Ist-Leistungsdaten und Soll-Leistungsdaten von mindestens einer weiteren Steuereinrichtung eines weiteren Windenergiesystems zu empfangen. Es kann im Vorfeld bereits auf zu erwartende Stromspitzen bzw. Überschwinger reagiert werden.

Die Abschaltung von Turbinen kann beispielsweise dann bereits (vorsorglich) erfolgen, wenn die Grenze der HGÜ-Kapazität durch die angeschlossenen Windenergiesysteme gemeinsam erreicht wird. Die informative Abstimmung über die Verfügbarkeit der Windenergiesysteme bzw. Windparks und damit der gesamten Leistungseinspeisung kann somit zur optimalen Ausnutzung der maximalen Anschlusskapazität genutzt werden, ohne Überschreitungen der Kapazität zu verursachen.

Darüber hinaus kann vorzugsweise vorgesehen sein, dass nur wenn genügend Windturbinen bzw. Windkraftanlagen am Netz sind, also aktiviert sind, eine Regelung bzw. eine zuvor beschriebene Leistungsreduzierung möglich ist. So ist es vorstellbar, dass das Windenergiesystem eingerichtet ist (zusammen mit mindestens einem Nachbarwindpark) eine Online-Erfassung der betriebsbereiten Windkraftanlagen durchzuführen. Eine zuvor beschriebene Regelung kann nur dann aktiviert werden, wenn alle bzw. eine (vorgebbare) kritische Zahl von aktiven Windkraftanlagen überschritten wird. Die Steuereinrichtung kann beispielsweise so lange deaktiviert sein, bis eine kritische Zahl an aktiven Windkraftanlagen überschritten ist. Dies reduziert den Energieverbrauch für die Überwachung.

Gemäß einer weiteren Ausführungsform kann die mindestens eine Winderfassungseinrichtung mindestens ein LIDAR-System (Laser Imaging Detection and Ranging) oder mindestens ein Windmessmast sein. Vorzugsweise kann mindestens eine Windkraftanlage, vorzugsweise jede Windkraftanlage, ein LIDAR-System umfassen. Mit dieser Winderfassungseinrichtung können z.B. die Windgeschwindigkeit und/oder die Windrichtung in einer bestimmten Entfernung von der jeweiligen Windkraftanlage, beispielsweise 100 bis 500 m, insbesondere 200 m, vor der Windkraftanlage gemessen werden. Hierdurch können Windböen bereits im Vorfeld detektiert werden. Zusätzlich oder alternativ zu dem LIDAR-System kann mindestens ein Windmessmast vorgesehen sein.

Durch die zuvor beschriebene Überlasterfassungseinrichtung und Überlastreduktionseinrichtung kann eine Regelung innerhalb weniger als 100 ms, insbesondere weniger als 50 ms, besonders bevorzugt weniger als 10 ms, durchgeführt werden. Eine unmittelbare Beschädigung der Komponenten der Hochspannungs-Gleichstromübertragungsstation kann verhindert werden. Insbesondere kann eine Beschädigung der Stromrichterschaltung, welche vorzugsweise Bipolartransistoren mit isolierter Gate-Elektrode (englisch: isulated-gate bipolar transistor, kurz IGBT) aufweist, verhindert werden kann. Dennoch können die IGBTs durch den kurzeitig fließenden Überlaststrom stark erwärmt und überlastet werden. Fließt unmittelbar nach einer nicht zu einer Beschädigung führenden Erwärmung wieder der maximal zulässige Strom, also nach Deaktivierung der Überlastreduktionsschaltung, kann es bei einer zeitnahen weiteren Überlastsituation aufgrund der noch starken Erwärmung zu Beschädigungen kommen. Um insbesondere eine Abkühlung der IGBTs nach einer Überlastsituation zu ermöglichen, kann gemäß einer weiteren Ausführungsform des erfindungsgemäßen Windenergiesystems die Steuereinrichtung eingerichtet sein, nach der Detektion einer Überlast des Windenergiesystems die mindestens eine Aktuatoreinrichtung anzusteuern, um den Rotorblattwinkel für eine vorgebbare Zeitdauer zu verstellen derart, dass die durch die Windkraftanlage erzeugte Leistung reduziert wird. Die Zeitdauer kann insbesondere von der Höhe und/oder Zeitdauer der Überlast abhängen. Durch die Reduktion der Leistung und des damit einhergehenden reduzierten Stroms für eine bestimmte Zeitdauer können insbesondere die IGBTs auf eine Normaltemperatur heruntergekühlt werden. Die Gefahr einer Beschädigung aufgrund einer Mehrzahl von kurz hintereinander auftretenden Windböen kann reduziert werden.

Ein weiterer Aspekt der Erfindung ist ein Verfahren zum Betreiben eines Windenergiesystems, insbesondere eines Offshore-Windenergiesystems, gemäß dem Patentanspruch 10. Das Windenergiesystem, insbesondere ein zuvor beschriebenes Windenergiesystem, weist eine Mehrzahl von mit einer Hochspannungs-Gleichstromübertragungsstation elektrisch verbundenen Windkraftanlagen auf. Das Verfahren umfasst die Schritte:
- Detektieren einer Überlast des Windenergiesystems, und
- Ansteuern einer Überlastreduktionsschaltung bei Detektion einer Überlast,
- wobei bei einer Ansteuerung der Überlastreduktionsschaltung zumindest der an der Hochspannungs-Gleichstromübertragungsstation empfangene Strom durch die Überlastreduktionsschaltung reduziert wird.

Durch eine Reduktion des empfangenen Stroms im Überlastfall durch die Überlastreduktionsschaltung kann eine Beschädigung des Windenergiesystems verhindert werden. Es ist keine pauschale Drosselung oder eine geringere pauschale Drosselung der Windkraftanlagen erforderlich. Überschwingungen können reduziert werden. Auch bei Starkwind mit Windböen kann ein maximaler Energieertrag generiert werden.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Windenergiesystem und das erfindungsgemäße Verfahren zum Betreiben eines Windenergiesystems auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Windenergiesystems gemäß der vorliegenden Erfindung,
- Fig. 2: eine schematische Ansicht eines Ausführungsbeispiels einer Windkraftanlage für ein Windenergiesystem gemäß Fig. 1,
- Fig. 3: eine schematische Ansicht eines Ausführungsbeispiels einer Überlastreduktionsschaltung gemäß der vorliegenden Erfindung, und
- Fig. 4: ein Flussdiagramm eines Ausführungsbeispiels eines Verfahrens gemäß der vorliegenden Erfindung zum Betreiben eines Windenergiesystems.

Nachfolgend werden für gleiche Elemente gleiche Bezugszeichen verwendet.

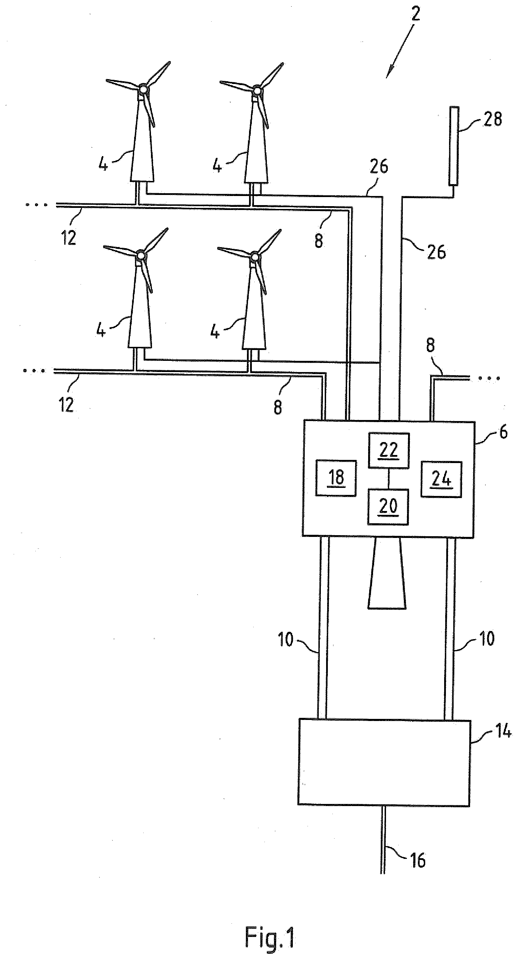

Die Figur 1 zeigt eine schematische Ansicht eines Ausführungsbeispiels eines Windenergiesystems 2 gemäß der vorliegenden Erfindung. Im vorliegenden Ausführungsbeispiel ist insbesondere ein Offshore-Windenergiesystem 2 dargestellt.

Das dargestellte Offshore-Windenergiesystem 2 umfasst eine Mehrzahl von Offshore-Windkraftanlagen 4. Die Offshore-Windkraftanlagen 4 sind dazu eingerichtet, die Windenergie in elektrische Energie zu wandeln. Insbesondere wird von einer Windkraftanlage 4 durch eine Generatoreinrichtung ein Wechselstrom erzeugt.

Ferner umfasst das Offshore-Windenergiesystem 2 eine Hochspannungs-Gleichstromübertragungsstation 6. Die Windkraftanlagen 4 und die Hochspannungs-Gleichstromübertragungsstation 6 sind miteinander über eine Mehrzahl von Seekabeln 8 elektrisch verbunden. Es versteht sich, dass zwischen der Hochspannungs-Gleichstromübertragungsstation 6 und den Windkraftanlagen 4 weitere Umspannstationen, beispielsweise zur Transformation von einer Spannungsebene auf eine andere Spannungsebene, zwischengeschaltet sein können.

Ein Seekabel 8 ist insbesondere dazu eingerichtet, die von einer Windkraftanlage 4 erzeugte elektrische Energie, wie der Wechselstrom, zur nächsten Windkraftanlage 4 bzw. an die Hochspannungs-Gleichstromübertragungsstation 6 zu übertragen.

Im vorliegenden Ausführungsbeispiel ist eine Mehrzahl von Windkraftanlagen 4 in mehreren Strängen 12 bzw. Strings 12 in Reihe geschaltet. Beispielsweise können acht Stränge mit jeweils sechs Windkraftanlagen vorgesehen sein.

Vorliegend sind zu Gunsten einer besseren Übersicht lediglich zwei Stränge 12 mit jeweils zwei Windkraftanlagen 4 abgebildet. Ein Ende eines Strangs 12 ist elektrisch über ein Seekabel 8 mit der Hochspannungs-Gleichstromübertragungsstation 6 verbunden. Die beiden anderen Enden können über ein zusätzliches (nicht dargestelltes) Seekabel miteinander verbindbar sein. Ferner kann vorgesehen, dass ein Strang optional mit mehreren anderen Strängen verbunden werden kann. Es versteht sich, dass gemäß anderen Varianten der Erfindung die Windkraftanlagen auch in Ringstrukturen angeordnet sein können.

Die Hochspannungs-Gleichstromübertragungsstation 6 ist insbesondere dazu eingerichtet, einen von den Windkraftanlagen 4 erzeugten Wechselstrom zu transformieren. Ein Wechselstrom kann für die Übertragung über eine weite Entfernung in einen Gleichstrom transformiert werden. Die dargestellte Hochspannungs-Gleichstromübertragungsstation 6 weist hierzu mindestens eine Stromrichtereinrichtung 18 auf. Die Stromrichtereinrichtung 18 ist dazu eingerichtet, den empfangenen Wechselstrom zur Hochspannungs-GleichstromÜbertragung in einen Gleichstrom zu transformieren. Vorzugsweise weist die Stromrichtereinrichtung 18 hierzu IGBTs auf. IGBTs haben sich als besonders leistungsfähig bei der Transformation von hohen Spannungen und Strömen erwiesen.

Neben mindestens einer Stromrichtereinrichtung 18 weist die Hochspannungs-Gleichstromübertragungsstation 6 im vorliegenden Ausführungsbeispiel mindestens eine Überlasterfassungseinrichtung 20 auf. Die Überlasterfassungseinrichtung 20 ist zum Erfassen einer Überlastung des Windenergiesystems 2 eingerichtet. Insbesondere kann ein elektrischer Netzparameter des Windenergiesystems, welcher für eine Überlast indikativ ist, gemessen werden. Beispielsweise kann die Überlasterfassungseinrichtung 20 eine Einrichtung zur Leistungsmessung und/oder Spannungsmessung umfassen. Alternativ oder zusätzlich kann der von der Hochspannungs-Gleichstromübertragungsstation 6 empfangene Strom, also der durch die an die Hochspannungs-Gleichstromübertragungsstation 6 angeschlossenen Windkraftanlagen 4 erzeugte und an diese übertragene Strom, gemessen werden. Mit anderen Worten kann der Strom (unmittelbar) vor der Stromrichteranlage 18 erfasst werden. Die Messung/en erfolgt/en bevorzugt zumindest nahezu kontinuierlich.

Zur Detektion einer Überlast ist die vorliegende Überlasterfassungseinrichtung 20 dazu eingerichtet, den erfassten Netzparameter, wie den genannten Strom, mit einem vorgegeben Netzparametergrenzwert, wie ein maximal zulässiger Stromwert, zu vergleichen. Der Netzparametergrenzwert kann beispielsweise auf (zuvor durchgeführte) Tests, Simulationen und/oder Herstellerangaben beruhen. Eine Überlast wird insbesondere dann detektiert, wenn der Netzparametergrenzwert überschritten (bzw. unterschritten) wird.

Es ist erkannt worden, dass bei einer aus IGBTs aufgebauten Stromrichtereinrichtung 18 die Überlast insbesondere von der Stromtragfähigkeit der IGBTs abhängt. IGBTs können bereits bei einem kurzeitigen Überschreiten eines maximal zulässigen Stroms beschädigt werden. Andere Komponenten des Windenergiesystems sind in der Regel weniger anfällig für kurzeitige Leistungs-, insbesondere Stromspitzen.

Es versteht sich, dass mehr als zwei Netzparametergrenzwerte vorgegeben werden können. Neben dem empfangenen Strom kann z.B. eine maximal zulässige Leistung vorgegeben werden. Ferner versteht es sich, dass andere Komponenten des Windenergiesystems, wie Seekabel, etc., für die Bestimmung des mindestens einen Netzparametergrenzwert ausschlaggebend sein können. Beispielsweise wenn als Stromrichter keine IGBTs eingesetzt werden.

Es versteht sich zudem, dass gemäß anderen Varianten der Erfindung auch mehrere Überlasterfassungseinrichtungen alternativ oder zusätzliche an einer anderen Position im Windenergiesystem 2, beispielsweise jeweils eine in/an einer Windkraftanlage 4, angeordnet sein können.

Darüber hinaus umfasst die Hochspannungs-Gleichstromübertragungsstation 6 vorliegend eine Steuereinrichtung 22. Die (zentrale) Steuereinrichtung 22, insbesondere eine leistungselektronische Steuereinrichtung 22, kann eine Kommunikationsverbindung mit der Überlasterfassungseinrichtung 20 aufweisen. Hierdurch kann die Überlasterfassungseinrichtung 20 die Steuereinrichtung 22 (unmittelbar) über eine detektierte Überlast benachrichtigen. Auch können beide Einrichtungen 20, 22 in einer Einrichtung implementiert sein.

In dem dargestellten Ausführungsbeispiel umfasst die Hochspannungs-Gleichstromübertragungsstation 6 darüber hinaus eine Überlastreduktionsschaltung 24. Die Überlastreduktionsschaltung 24 ist durch die Steuereinrichtung 22 (unmittelbar) ansteuerbar. Dies hat den Vorteil, dass unmittelbar bei Detektion einer Überlast die Überlastreduktionsschaltung 24 aktiviert werden kann. Hierdurch kann eine Stromreduktion innerhalb von wenigen ms, beispielsweise innerhalb von 10 ms, bewirkt werden.

Die Überlastreduktionsschaltung 24 ist dazu eingerichtet, zumindest den von der Hochspannungs-Gleichstromübertragungsstation 6 empfangenen Strom zu reduzieren. Insbesondere kann zumindest ein Teil des Stromes abgeleitet oder der Strom durch eine Spannungserhöhung reduziert werden. Mögliche Ausgestaltungen einer Überlastreduktionsschaltung 24 werden nachfolgend erläutert. Grundsätzlich wäre die Reduktion des Stromes auch durch ein Ableiten eines Stromes (bzw. Erhöhung der Spannung) an einer anderen Position des Windenergiesystems 2, wie an einer Windkraftanlage 4 oder einer nicht dargestellten zwischengeschalteten Umspannstation, realisierbar.

Wie ferner aus der Figur 1 zu erkennen ist, sind zwischen den Windkraftanlagen 4 und der Hochspannungs-Gleichstromübertragungsstation 6, insbesondere der Steuereinrichtung 22, Kommunikationsverbindungen 26 vorgesehen. Bei den Kommunikationsverbindungen 26 kann es sich um drahtlose und/oder drahtgebundene Verbindungen handeln.

Die Hochspannungs-Gleichstromübertragungsstation 6 ist wiederum mit einer bevorzugt auf dem Festland angeordneten weiteren Umspannstation 14 elektrisch verbunden. Im vorliegenden Ausführungsbeispiel sind zwei Energiekabel 10 vorgesehen. Die weitere Umspannstation 14 ist dazu eingerichtet, den empfangenen Gleichstrom wieder in einen geeigneten Wechselstrom zu wandeln und dann in das öffentliche Stromnetz 16 einzuspeisen.

Schließlich ist in dem vorliegenden Ausführungsbeispiel eine Winderfassungseinrichtung 28 in Form eines Windmessmastes 28 dargestellt. Ein Windmessmast 28 kann zur Erfassung von mindestens einem Windparameter, wie der Windgeschwindigkeit oder der Windrichtung, eingerichtet sein. Insbesondere kann der Windmessmast 28 über Geräte zur Messung von Windgeschwindigkeit (Anemometer) und -richtung (Anemoskope) verfügen.

Der Windmessmast 28 ist in einer bestimmten Entfernung zu (sämtlichen) Windkraftanlagen angeordnet. Dieser Abstand ermöglicht es, beispielsweise eine (plötzliche) Erhöhung der Windstärke in Form einer Windböe vor einem Eintreffen an den Windkraftanlagen 4 zu erfassen. Hierdurch kann prädikativ eine Überlast des Windenergiesystems zumindest reduziert werden, wie nachfolgend ausgeführt wird.

Der Windmessmast 28 ist zur Übertragung des Windparameters an die Steuereinrichtung 22 über eine Kommunikationsverbindung 26 mit der Hochspannungs-Gleichstromübertragungsstation 6 verbunden. Insbesondere kann der mindestens eine erfasste Windparameter der Steuereinrichtung 22 zur Verfügung gestellt werden.

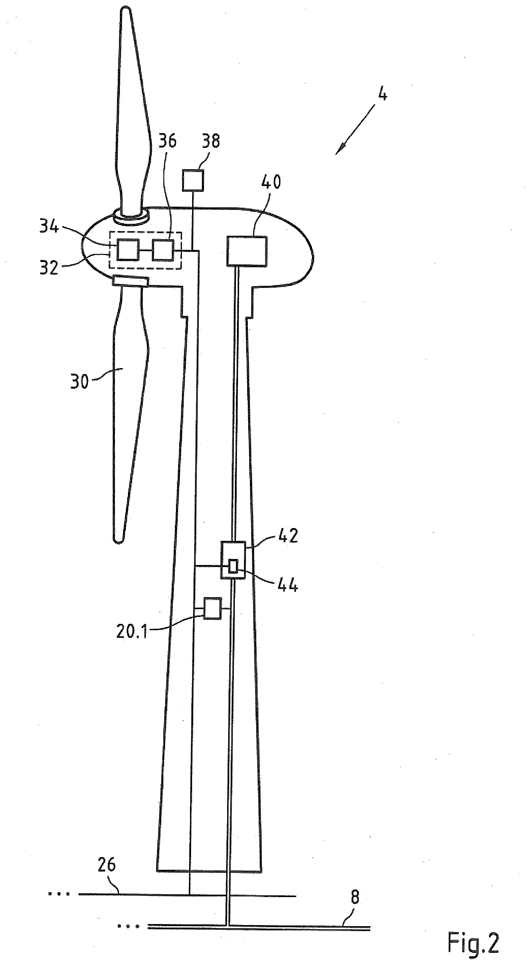

In Figur 2 ist eine detailliertere schematische Ansicht eines Ausführungsbeispiels einer Windkraftanlage 4 dargestellt, welche in dem zuvor beschriebenen Windenergiesystem 2 eingesetzt werden kann.

Die dargestellte Windkraftanlage 4 weist einen Rotor mit einer Mehrzahl von Rotorblättern 30 auf. Mit dem Rotor in Wirkverbindung steht ein Generator 40 zum Erzeugen von elektrischer Energie. Der erzeugte Strom wird einem DC-Zwischenkreis 42 der Windkraftanlage 4 zugeführt.

Ein DC-Zwischenkreis 42 einer Windkraftanlage 4 umfasst in der Regel bereits eine Chopperschaltung 44. Es ist erkannt worden, dass diese Chopperschaltung 44 als Überlastreduktionsschaltung verwendet werden kann. Vorzugsweise sollte die Chopperschaltung 44 derart modifiziert werden, dass eine größere Strommenge abgeleitet werden kann, ohne dass die Chopperschaltung 44 beschädigt wird.

Zur Ansteuerung der Chopperschaltung 44 kann diese mit einer (zentralen) Steuereinrichtung 22, welche beispielsweise an der Hochspannungs-Gleichstromübertragungsstation 6 angeordnet sein kann, über den Kommunikationskanal 26 verbunden sein.

Ferner weist die Windkraftanlage 4 eine Überlasterfassungseinrichtung 20.1 auf. Diese kann beispielsweise den von der Windkraftanlage 4 erzeugten Strom messen. Beispielsweise kann die Überlasterfassungseinrichtung 20.1 eine Überlast mittels einer zuvor beschriebenen Vergleichsoperation detektieren. Die erfasste Überlast kann über den Kommunikationskanal 26 unmittelbar an die Steuereinrichtung 22 übertragen werden. Auch kann die Überlasterfassungseinrichtung 20.1 (zusätzlich) eine weitere (nicht dargestellte) Steuereinrichtung umfassen, welche dazu eingerichtet sein kann, die Chopperschaltung 44 unmittelbar anzusteuern. Eine besonders schnelle Regelung kann erzielt werden.

Auch kann vorgesehen sein, dass die Überlasterfassungseinrichtung 24.1 lediglich als eine Messeinrichtung 24.1 ausgebildet ist. Der erfasste Stromwert kann einer übergeordneten weiteren Überlasterfassungseinrichtung 24 zur Bestimmung einer Überlast in zuvor beschriebener Weise bereitgestellt werden. Insbesondere können in diesem Fall sämtliche Windkraftanlagen 4 jeweils mindestens eine entsprechende Messeinrichtung 24.1 aufweisen, welche mit der übergeordneten weiteren Überlasterfassungseinrichtung 24 verbunden sind. In diesem Fall kann der gesamte im Windenergiesystem 2 erzeugte Strom berücksichtigt werden. Bei einer Überlast kann eine oder mehrere Chopperschaltungen von einer oder mehreren Windkraftanlage angesteuert werden. Wie bereits beschrieben wurde, kann eine Überlasterfassung auch an einer anderen Position im Windenergiesystem 2 erfolgen.

Zum Regeln der durch die aerodynamischen Auftriebskräfte bewirkte Drehzahl des Rotors der Windkraftanlage 4 kann der Rotorblattwinkel durch eine Aktuatoreinrichtung 32 umfassend mindestens einen Aktuator 34, wie einen Motor, und eine Steuerung 36 verstellt werden. Insbesondere kann hierdurch die durch die Windkraftanlage 4 erzeugte Leistung bzw. der erzeugte Strom geregelt werden.

Ferner ist eine Winderfassungseinrichtung 38 vorgesehen. Die Winderfassungseinrichtung 38 kann insbesondere ein LIDAR-System (Laser Imaging Detection and Ranging) sein. Mit dieser Winderfassungseinrichtung 38 können Windgeschwindigkeit und/oder Windrichtung in einer bestimmten Entfernung, beispielsweise 100 bis 500 m, insbesondere 200 m, vor der Windkraftanlage 4 gemessen werden. Hierdurch können Windböen bereits im Vorfeld detektiert werden. Der Vorteil einer früheren Detektion sind die damit einhergehenden längeren zur Verfügung stehenden Regelzeiten. Zudem kann beispielsweise bei Detektion einer signifikanten Windänderung der Aktuator (zusätzlich) den Rotorblattwinkel zur (vorübergehenden) Leistungsreduktion verstellen. Auch kann basierend auf den erfassten Windparametern die Windkraftanlage 4 permanent gedrosselt oder gar abgeschaltet werden.

Die erfassten Windparameter können ferner einer Steuereinrichtung 22, welche beispielsweise an der Hochspannungs-Gleichstromübertragungsstation 6 angeordnet sein kann, zur Verfügung gestellt werden.

Das LIDAR-System 38 kann alternativ oder zusätzlich zu dem mindestens einem Windmessmast 28 vorgesehen sein.

Es versteht sich, dass in der dargestellten Windkraftanlage 4 aus Gründen einer besseren Übersicht lediglich die für die vorliegende Erfindung relevanten Komponenten einer Windkraftanlage 4 dargestellt und beispielsweise andere Komponenten, wie Getriebe, Bremse, etc., nicht dargestellt wurden.

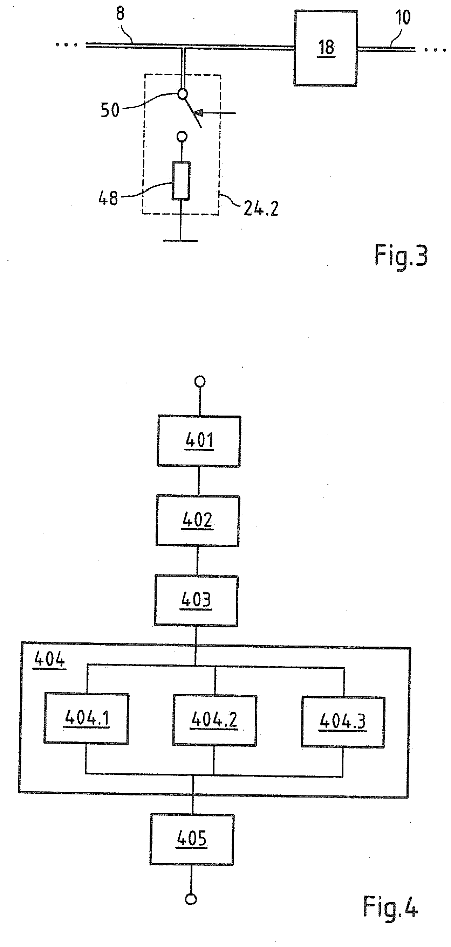

In Figur 3 ist ein Ausführungsbeispiel einer Überlastreduktionsschaltung 24.2 gemäß der vorliegenden Erfindung dargestellt. Die Überlastreduktionsschaltung 24.2 ist vorliegend insbesondere an der Hochspannungs-Gleichstromübertragungsstation 6 vor der Stromrichtereinrichtung 18, also auf der Wechselstromseite, angeordnet.

Die Überlastreduktionsschaltung 24.2 umfasst eine Last 48. Die Last ist insbesondere ein mit Erde verbundener Widerstand 48. Darüber hinaus ist eine Schalteinrichtung 50 vorgesehen. Diese Schalteinrichtung 50 kann beispielsweise durch die Steuereinrichtung 22 angesteuert werden.

Bei Detektion einer Überlast wird die Schalteinrichtung 50 aufgrund eines Ansteuersignals geschlossen. Ein Teilstrom des von der Hochspannungs-Gleichstromübertragungsstation 6 empfangenen Stroms kann abgeleitet werden. Eine Überlast insbesondere der Stromrichtereinrichtung 18 kann vermieden werden. Wenn die Überlastsituation nicht mehr besteht, beispielsweise die Windböe vorbeigezogen ist, kann die Schalteinrichtung 50 wieder geöffnet werden. Um zu große Spannungssprünge zu vermeiden, können gestufte Lastanordnungen eingesetzt und/oder eine gepulste Ansteuerung der Leistungselektronik vorgesehen sein. Insbesondere kann die Steuereinrichtung 22 dazu eingerichtet sein, die abzuführende Strommenge beispielsweise in Abhängigkeit des Vergleichs des gemessenen Netzparameters und mit dem vorgegebenen Netzparametergrenzwerts zu bestimmen, welche zur Vermeidung einer Überlast mindestens und insbesondere auch höchstens erforderlich ist. Entsprechend kann eine gestufte Last angesteuert und/oder ein gepulstes Ansteuerungssignal erzeugt werden. Nur der Überlaststrom kann abgeführt werden.

Figur 4 zeigt ein Flussdiagramm eines Ausführungsbeispiels eines Verfahrens gemäß der vorliegenden Erfindung zum Betreiben eines Windenergiesystems, wie das zuvor beschriebene Offshore-Windenergiesystem 2.

In einem ersten Schritt 401 können beispielsweise zur Vorbeugung einer Überlast Windparameter erfasst werden. Dies kann beispielsweise durch einen Windmessmast 28 und/oder ein LIDAR-System 38 erfolgen. Vorzugsweise erfolgt eine kontinuierliche Windmessung sowohl der Windgeschwindigkeit als auch der Windrichtung.

Wird in Schritt 402 eine signifikante Windveränderung, beispielsweise eine Windsteigerung in Folge einer Windböe, detektiert, dann kann beispielsweise vorbeugend bereits die durch die Windkraftanlage/n 4 erzeugte Leistung durch eine Änderung des Rotorblattwinkels eines oder mehrere Windkraftanlagen 4 reduziert werden. Auch kann eine entsprechende Information an die Steuereinrichtung 22 weitergegeben werden, um eine Ansteuerung der Überlastreduktionsschaltung 24 vorzubereiten oder die Überlastreduktionsschaltung 24 (vorbeugend) anzusteuern (siehe auch nachfolgenden Schritt 404).

Vorzugsweise parallel zur Windmessung in Schritt 401 kann in Schritt 403 durch mindestens eine Überlasterfassungseinrichtung 20 die Belastung des Windenergiesystems 2 überwacht werden. Beispielsweise kann kontinuierlich der von sämtlichen Windkraftanlagen erzeugte Strom gemessen werden. Wird in Schritt 403 eine Überlastbedingung, wie ein Überschreiten eines maximal zulässigen Stroms detektiert, können in Schritt 404 unmittelbar Gegenmaßnahmen eingeleitet und zumindest der an der Hochspannungs-Gleichstromübertragungsstation 6 empfangene Strom reduziert werden.

Beispielsweise kann in einem Schritt 404.1 eine zuschaltbare Last 48 von einer Steuereinrichtung 22 (unmittelbar) bei Detektion einer Überlast angesteuert werden. Ist eine stufenförmige Lastanordnung vorgesehen, kann beispielsweise in Abhängigkeit der detektierten Überlast, insbesondere in Abhängigkeit einer quantitativen Differenz zwischen Netzparametergrenzwert und dem gemessen Netzparameter, die abgeführte Stromenge derart geregelt werden, dass lediglich so viel Strom abgeführt wird, dass eine Überlast vermieden wird.

Alternativ oder zusätzlich kann eine Chopperschaltung 44, beispielsweise eine (modifizierte) Chopperschaltung 44 einer oder mehrerer, beispielsweise sämtlicher Windkraftanlagen 4, und/oder eine zusätzlich im Windenergiesystem 2 installierte Chopperschaltung, beispielsweise an der Hochspannungs-Gleichstromübertragungsstation 6 angeordnete Chopperschaltung, von einer Steuereinrichtung 22 (unmittelbar) bei Detektion einer Überlast angesteuert werden (Schritt 404.2).

Darüber hinaus kann alternativ oder zusätzlich zu den zuvor beschriebenen Überlastreduktionsschaltungen in einem Schritt 404.3 mittels einer Spannungsüberhöhungsschaltung der Strom zumindest reduziert werden. Der Einsatz einer schnellen Spannungserhöhung an der AC-Seite der Hochspannungs-Gleichstromübertragungsstation 6 bei Detektion eines Überschreitens eines maximal zulässigen Stroms kann bei konstanter Leistung durch eine entsprechende Spannungsanhebung zu einer Stromabsenkung führen. Beispielsweise kann die Spannungsüberhöhungsschaltung eingerichtet sein, zusätzliche Blindleistung in das Netz des Windenergiesystems 2 einzuspeisen.

Die zuvor in den Schritten 404.1 bis 404.3 beschriebenen Überlastreduktionsschaltungen können auch vorbeugend bei Detektion von bestimmten Windbedingungen (siehe Schritt 402) von einer Steuereinrichtung 22 angesteuert werden.

Wird in Schritt 405 beispielsweise durch die Überlasterfassungseinrichtung 20 detektiert, dass keine Überlast des Windenergiesystems 2 mehr vorliegt, beispielsweise durch ein Unterschreiten eines bestimmbaren weiteren Netzparametergrenzwerts, können in diesem Schritt evtl. aktivierte Überlastreduktionsschaltung wieder deaktiviert werden. Es versteht sich, dass dies stufenweise erfolgen kann.

Da trotz einer unmittelbaren Regelung bei einer Überlast eine ungewünschte Erwärmung beispielsweise der IGBTs der Stromrichteranordnung 18 aufgetreten sein kann, kann durch eine vorübergehende Leistungsreduktion des Windenergiesystems eine Abkühlung der IGBTs erreicht werden. Beispielsweise kann in Schritt 405 die Steuereinrichtung 22 mindestens eine Aktuatoreinrichtung 32 ansteuern, um den Rotorblattwinkel einer Windkraftanlage 4 derart zu verstellen, dass zumindest für eine vorgebbare Zeitdauer die erzeugte Leistung reduziert wird. Mit anderen Worten wird das Windenergiesystem für einen bestimmten Zeitraum mit einer geringeren Nennleistung betrieben.

## Patentansprüche

1. Windenergiesystem (2), insbesondere Offshore-Windenergiesystem (2), umfassend eine Mehrzahl von mit einer Hochspannungs-Gleichstromübertragungsstation (6) elektrisch verbundenen Windkraftanlagen (4),
**dadurch gekennzeichnet, dass**
- mindestens eine Überlasterfassungseinrichtung (20, 20.1) zum Detektieren einer Überlast des Windenergiesystems (2) vorgesehen ist, und
- mindestens eine Steuereinrichtung (22) zum Ansteuern mindestens einer Überlastreduktionsschaltung (24, 24.2, 44) zumindest bei Detektion der Überlast vorgesehen ist,
- wobei die Überlastreduktionsschaltung (24, 24.2, 44) eingerichtet ist, derart, dass bei einer Ansteuerung der Überlastreduktionsschaltung (24, 24.2, 44) zumindest der an der Hochspannungs-Gleichstromübertragungsstation (6) empfangene Strom reduziert wird.

2. Windenergiesystem (2) nach Anspruch 1, **dadurch gekennzeichnet, dass**
- die Überlasterfassungseinrichtung (20, 20.1) eingerichtet ist, mindestens einen elektrischen Netzparameter des Windenergiesystems (2)zu erfassen, und
- die Überlasterfassungseinrichtung (20, 20.1) eingerichtet ist, eine Überlast des Windenergiesystems (2) durch einen Vergleich des gemessenen Netzparameters mit einem vorgegebenen Netzparametergrenzwert zu detektieren.

3. Windenergiesystem (2) nach Anspruch 2, **dadurch gekennzeichnet, dass**
- die Überlasterfassungseinrichtung (20.1) eingerichtet ist, als Netzparameter den von mindestens einer Windkraftanlage (4) erzeugten Strom zu messen,
und/oder
- die Überlasterfassungseinrichtung (20) eingerichtet ist, als Netzparameter den an der Hochspannungs-Gleichstromübertragungsstation (6) empfangenen Strom zu messen.

4. Windenergiesystem (2) nach einem der vorherigen Ansprüche, **dadurch gekennzeichnet, dass**
- die Überlastreduktionsschaltung (24, 24.2) mindestens eine zuschaltbare Last (48), insbesondere eine Mehrzahl von stufenförmig zuschaltbaren Lasten aufweist,
und/oder
- die Überlastreduktionsschaltung (24, 44) eine Chopperschaltung (44) ist,
und/oder
- die Überlastreduktionsschaltung (24) eine Spannungserhöhungsschaltung ist.

5. Windenergiesystem (2) nach Anspruch 4, **dadurch gekennzeichnet, dass** die Steuereinrichtung (22) eine leistungselektronische Steuereinrichtung (22) ist, wobei die leistungselektronische Steuereinrichtung (22) insbesondere zum gepulsten Ansteuern der mindestens einen zuschaltbaren Last (48) eingerichtet ist.

6. Windenergiesystem (2) nach Anspruch 4 oder 5, **dadurch gekennzeichnet, dass** die Chopperschaltung (44) eine im Wechselstromzwischenkreis (42) einer Windkraftanlage (4) vorgesehene Chopperschaltung (44) ist.

7. Windenergiesystem (2) nach einem der vorherigen Ansprüche, **dadurch gekennzeichnet, dass**
- das Windenergiesystem (2) mindestens eine Winderfassungseinrichtung (28, 38) umfasst,
- wobei die Winderfassungseinrichtung (28, 38) zum Erfassen von mindestens einem Windparameter in einem vorgegebenen Abstand zu mindestens einer Windkraftanlage (4) eingerichtet ist, und
- die Winderfassungseinrichtung (28, 38) eingerichtet ist, den erfassten Windparameter an die Steuereinrichtung (22) zu übertragen.

8. Windenergiesystem (2) nach Anspruch 7, **dadurch gekennzeichnet, dass**
- mindestens eine Windkraftanlage (4) mindestens eine Aktuatoreinrichtung (32) zum Verstellen eines Rotorblattwinkels der Windkraftanlage (4) aufweist,
- wobei die Aktuatoreinrichtung (32) eingerichtet ist, den Rotorblattwinkel in Abhängigkeit des erfassten Windparameters zu verstellen.

9. Windenergiesystem (2) nach einem der vorherigen Ansprüche, **dadurch gekennzeichnet, dass** die Steuereinrichtung (22) eingerichtet ist, bei Detektion einer Überlast des Windenergiesystems (2) die mindestens eine Aktuatoreinrichtung (32) anzusteuern, um den Rotorblattwinkel für eine vorgebbare Zeitdauer zu verstellen derart, dass die durch die Windkraftanlage (4) erzeugte Leistung reduziert wird.

10. Windenergiesystem (2) nach einem der vorherigen Ansprüche, **dadurch gekennzeichnet, dass** die Steuereinrichtung (22) eingerichtet ist, Leistungsdaten von zumindest einem weiteren Windenergiesystem zu empfangen, und die Steuereinrichtung (22) eingerichtet ist, in Abhängigkeit der Leistungsdaten (22) mindestens eine Windkraftanlage (4) zu deaktivieren.

11. Verfahren zum Betreiben eines Windenergiesystems (2), insbesondere Offshore-Windenergiesystem (2), wobei das Windenergiesystem (2) eine Mehrzahl von mit einer Hochspannungs-Gleichstromübertragungsstation (6) elektrisch verbundenen Windkraftanlagen (4) aufweist, umfassend:
- Detektieren der Überlast des Windenergiesystems (2), und
- Ansteuern einer Überlastreduktionsschaltung (24, 24.2, 44) bei Detektion der Überlast,
- wobei bei einer Ansteuerung der Überlastreduktionsschaltung (24, 24.2, 44) zumindest der an der Hochspannungs-Gleichstromübertragungsstation (6) empfangene Strom durch die Überlastreduktionsschaltung (24, 24.2, 44) reduziert wird.

## Claims

1. Wind energy system (2), in particular, an offshore wind energy system (2), comprising a plurality of wind power turbines (4) electrically connected to a high voltage direct current transmission station (6),
**characterized in that**
- at least one overload detection device (20, 20.1) is provided for detecting an overload of the wind energy system (2), and
- at least one control device (22) is provided for controlling at least one overload reduction circuit (24, 24.2, 44) at least when the overload is detected,
the overload reduction circuit (24, 24.2, 44) being configured in such a way that, when the overload reduction circuit (24, 24.2, 44) is triggered, at least the current received at the high voltage direct current transmission station (6) is reduced.

2. Wind energy system (2) according to claim 1, **characterized in that**
- the overload detection device (20, 20.1) is configured to detect at least one electrical network parameter of the wind energy system (2), and
- the overload detecting device (20, 20.1) is configured to detect an overload of the wind energy system (2) by comparing the measured network parameter with a predetermined network parameter limit value.

3. Wind energy system (2) according to claim 2, **characterized in that**
- the overload detection device (20.1) is configured to measure, as a network parameter, the current generated by at least one wind turbine (4),
and/or
- the overload detection means (20) is configured to measure, as a network parameter, the current received at the high voltage direct current transmission station (6).

4. Wind energy system (2) according to one of the previous claims, **characterized in that**
- the overload reduction circuit (24, 24.2) comprises at least one switchable load (48), in particular, a plurality of step-shaped switchable loads,
and/or
- the overload reduction circuit (24, 44) is a chopper circuit (44),
and/or
- the overload reduction circuit (24) is a voltage boost circuit.

5. Wind energy system (2) according to claim 4, **characterized in that** the control device (22) is a power electronic control device (22), the power electronic control device (22) being configured in particular for pulsed control of the at least one switchable load (48).

6. Wind energy system (2) according to claim 4 or 5, **characterized in that** the chopper circuit (44) is a chopper circuit (44) provided in the alternating current intermediate circuit (42) of a wind power plant (4).

7. Wind energy system (2) according to one of the previous claims, **characterized in that**
- the wind energy system (2) comprises at least one wind detection device (28, 38),
- wherein the wind detecting device (28, 38) is configured to detect at least one wind parameter at a predetermined distance from at least one wind power turbine (4), and
- the wind detecting device (28, 38) is configured to transmit the detected wind parameter to the control means (22).

8. Wind energy system (2) according to claim 7, **characterized in that**
- at least one wind turbine (4) comprises at least one actuator device (32) for adjusting a rotor blade angle of the wind turbine (4),
- wherein the actuator device (32) is configured to adjust the rotor blade angle in dependence on the detected wind parameter.

9. Wind energy system (2) according to one of the previous claims, **characterized in that** the control device (22) is configured, upon detection of an overload of the wind energy system (2), to drive the at least one actuator device (32) in order to adjust the rotor blade angle for a predeterminable period of time in such a way that the power generated by the wind power turbine (4) is reduced.

10. Wind energy system (2) according to one of the previous claims, **characterized in that** the control device (22) is configured to receive power data from at least one further wind energy system, and the control device (22) is configured to deactivate at least one wind turbine (4) in dependence on the power data (22).

11. Method for operating a wind energy system (2), in particular, an offshore wind energy system (2), wherein the wind energy system (2) comprises a plurality of wind power turbines (4) electrically connected to a high voltage direct current transmission station (6), comprising:
- detecting the overload of the wind energy system (2), and
- controlling of an overload reduction circuit (24, 24.2, 44) upon detection of the overload,
- wherein at least the current received at the high voltage direct current transmission station (6) is reduced by controlling the overload reduction circuit (24, 24.2, 44).

## Revendications

1. Système d'énergie éolienne (2), en particulier système d'énergie éolienne offshore (2), qui comprend une pluralité d'éoliennes (4), qui sont reliées à une station de transfert de courant continu haute tension (6),
**caractérisé en ce que**
- au moins un dispositif de détection de surcharge (20, 20.1) est prévu pour la détection d'une surcharge du système d'énergie éolienne (2), et
- au moins un dispositif de commande (22) est prévu pour la commande d'au moins un circuit de réduction de surcharge (24, 24.2, 44), au moins lors de la détection de la surcharge,
- sachant que le circuit de réduction de surcharge (24, 24.2, 44) est aménagé de manière à ce que, lors de la commande du circuit de réduction de surcharge (24, 24.2, 44), au moins le courant reçu par la station de transfert de courant continu haute tension (6) soit réduit.

2. Système d'énergie éolienne (2) selon la revendication 1,
**caractérisé en ce que**
- le dispositif de détection de surcharge (20, 20.1) est aménagé pour détecter au moins un paramètre de réseau électrique du système d'énergie éolienne (2),
- le dispositif de détection de surcharge (20, 20.1) est aménagé pour détecter une surcharge du système d'énergie éolienne (2) par une comparaison établie entre le paramètre de réseau mesuré et une valeur limite de paramètre de réseau.

3. Système d'énergie éolienne (2) selon la revendication 2,
**caractérisé en ce que**
- le dispositif de détection de surcharge (20.1) est aménagé pour mesurer en tant que paramètre de réseau le courant généré par au moins une éolienne (4),
et / ou que
- le dispositif de détection de surcharge (20) est aménagé pour mesurer en tant que paramètre de réseau le courant reçu par la station de transfert de courant continu haute tension (6).

4. Système d'énergie éolienne (2) selon l'une des revendications précédentes,
**caractérisé en ce que**
- le circuit de réduction de surcharge (24, 24.2) présente au moins une charge connectable (48), en particulier une pluralité de charges pouvant être connectées graduellement,
et / ou que
- le circuit de réduction de surcharge (24, 44) est un circuit hacheur (44),
et / ou que
- le circuit de réduction de surcharge (24) est un circuit d'élévation de la tension.

5. Système d'énergie éolienne (2) selon la revendication 4,
**caractérisé en ce que**
le dispositif de commande (22) est un dispositif de commande électronique de puissance (22), sachant que le dispositif de commande électronique de puissance (22) est en particulier aménagé pour la command pulsée de l'au moins une charge connectable (48).

6. Système d'énergie éolienne (2) selon revendication 4 ou 5,
**caractérisé en ce que** le circuit hacheur (44) est un circuit hacheur (44) qui est prévu dans le circuit intermédiaire de courant alternatif (42) d'une éolienne (4).

7. Système d'énergie éolienne (2) selon l'une des revendications précédentes,
**caractérisé en ce que**
- le système d'énergie éolienne (2) comprend au moins un dispositif de détection du vent (28, 38),
- sachant que le dispositif de détection du vent (28, 38) est aménagé pour la détection d'au moins un paramètre de vent à une distance prédéterminée d'au moins une éolienne (4), et que
- le dispositif de détection du vent (28, 38) est aménagé pour transmettre au dispositif de commande (22)le paramètre de vent détecté.

8. Système d'énergie éolienne (2) selon la revendication 7,
**caractérisé en ce que**
- au moins une éolienne (4) est dotée d'au moins un dispositif actionneur (32) pour le réglage d'un angle de pale de rotor de l'éolienne (4),
- sachant que le dispositif actionneur (32) est aménagé pour régler l'angle de pale de rotor en fonction du paramètre de vent détecté.

9. Système d'énergie éolienne (2) selon l'une des revendications précédentes,
**caractérisé en ce que**
- le dispositif de commande (22) est aménagé pour commander l'au moins un dispositif actionneur (32) lors de la détection d'une surcharge du système d'énergie éolienne (2), afin de régler l'angle de pale de rotor pendant un laps de temps prédéterminé, de manière à ce que la puissance générée par l'éolienne (4) soit réduite.

10. Système d'énergie éolienne (2) selon l'une des revendications précédentes,
**caractérisé en ce que**
le dispositif de commande (22) est aménagé pour recevoir des données de puissance d'au moins un autre système d'énergie éolienne et le dispositif de commande (22) est aménagé pour désactiver au moins une éolienne (4) en fonction des données de puissance du dispositif de commande (22).

11. Procédé de fonctionnement d'un système d'énergie éolienne (2), en particulier d'un système d'énergie éolienne offshore (2), sachant que le système d'énergie éolienne (2) comprend un pluralité d'éoliennes (4), qui sont reliées à une station de transfert de courant continu haute tension (6), le procédé comprenant:
- la détection de la surcharge du système d'énergie éolienne (2), et
- la commande d'un circuit de réduction de surcharge (24, 24.2, 44),
- sachant que, lors de la commande du circuit de réduction de surcharge (24, 24.2, 44), au moins le courant reçu par la station de transfert de courant continu haute tension (6) est réduit par le circuit de réduction de surcharge (24, 24.2, 44).
